(19) Europäisches Patentamt
European Patent Office
Office européen des brevets

(11) **EP 3 051 315 A1**

(12) **EUROPEAN PATENT APPLICATION**

(43) Date of publication:
**03.08.2016  Bulletin 2016/31**

(51) Int Cl.:
***G01S 19/34*** *(2010.01)*

(21) Application number: **15382021.2**

(22) Date of filing: **29.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonica Digital España, S.L.U.**
**28013 Madrid (ES)**

(72) Inventors:
• **Fernandez Pozo, Rubén**
**28013 Madrid (ES)**

• **Hernandez Gomez, Luis, Alfonso**
**28013 Madrid (ES)**
• **Lopez Meco, David**
**28013 Madrid (ES)**
• **Hortigüela Martin, Lorenzo**
**28013 Madrid (ES)**
• **Astiz Lezaun, Eguzki**
**28013 Madrid (ES)**

(74) Representative: **Carpintero Lopez, Francisco et al**
**Herrero & Asociados, S.L.**
**Alcalá 35**
**28014 Madrid (ES)**

(54) **Method and device for activating and deactivating geopositioning devices in moving vehicles**

(57)    A mobile user terminal (1) and method for activating/deactivating geopositioning devices (13) in moving vehicles, wherein the detection of the geopositioning device (13) located in a moving vehicle is based on data from low-energy consumption sensors (11) provided by the mobile user terminal (1). If the mobile user terminal (1) is located in the moving vehicle, at least one probe pattern related to a situation of the moving vehicle is identified and based on the identified probe pattern and data from low-energy consumption sensors (11), it is verified either that the situation corresponds to the mobile user terminal (1) riding in the moving vehicle (12), and then the geopositioning device (13) is activated (18), or that the mobile user terminal (1) is stopped in the moving vehicle (15), and then the geopositioning device (13) is deactivated (16). The steps of detecting and identifying the moving vehicle situation, performed by the mobile user terminal (1), use short-time and long-time probes.

## Description

### Field of the invention

The present invention has its application within the telecommunication sector, more specifically, relates to energy-efficient strategies for the automatic activation of geopositioning devices (e.g., Global Positioning System -GPS- receivers) located in a mobile phone which, in turn, can be in a moving vehicle.

The present invention is a mobile user device and method for activating and deactivating geopositioning receivers of the mobile device depending on whether the mobile device is riding in a moving vehicle or not, which can be driven or not by the user.

### Background of the invention

Today's smartphones are equipped with embedded geopositioning devices (mainly GPS, Global Positioning System), which allow the development of new location-based services (LBSs) and applications suited to the context and activities the user is involved on.

A major issue in the development of location-based services (LBSs) for smartphones is the important battery consumption of geopositioning devices. In many applications, LBSs are only needed when the user is involved in a specific context, as, for example, while driving a vehicle.

However, a frequent use of LBS applications in smartphones can result in severe battery drain making a serious impact on user experience. Several strategies are being proposed to effectively reduce the energy consumption for smartphones running LBSs, such as the approach described by Kyu-Han Kim et al. in "Improving energy efficiency of location sensing on smartphones" (Proceedings of the 8th international conference on Mobile systems, applications and services, ACM, 2010). Some of these strategies are based on the use of alternative positioning technologies (e.g., network-based location sensing) that consumes lower power than GPS, as described by Kyu-Han Kim et al. in "Energy-efficient positioning for smartphones using cell-id sequence matching" (Proceedings of the 9th international conference on Mobile systems, applications and services, ACM, 2011).

Other approaches consider that, in some scenarios, more than one LBS application may be running in a single smartphone at the same time. In those scenarios some strategies have been proposed, such as the former approach described by Kyu-Han Kim et al. in "Improving energy efficiency of location sensing on smartphones", where a middleware manages the efficient use of positioning resources shared among several LBSs, thus avoiding unnecessary GPS invoking events.

In other cases, when applications only require "trajectory information" instead of specific single positions, trajectory simplification approaches have been proposed, as disclosed in "Entracked: energy-efficient robust position tracking for mobile devices" by Mikkel Baun Kjaergaardet al. (Proceedings of the 7th international conference on Mobile systems, applications and services, ACM, 2009). In trajectory simplification only a small subset of positions are needed to obtain the overall motion information.

Some additional approaches are directed to minimize the frequency update of sampling positions (i.e. GPS positions) taking into account the uncertainty in the user position, context or activity. In the above-mentioned approach described by Mikkel Baun Kjaergaardet al., a process firstly obtains a GPS position and then uses a certain method to determine the user state (i.e. whether the device is moving or not). If the device is not moving, the logic waits for movement. When the device is moving, the acquisition of GPS positions is scheduled based on an estimation of its speed. Also, dynamic tracking strategies have been proposed in "Impact of sensor-enhanced mobility prediction on the design of energy-efficient localization" by Chuang-Wen You et al. (p.p.1221-1237, Ad Hoc Networks 6.8, 2008), taking into account a constant positioning accuracy and delay, target speed and acceleration to detect if the target is moving or not.

Similarly, the alternative engagement or disengagement of a geopositioning receiver depending on whether a mobile device is in motion or at rest, has been disclosed in US20130085861. When the geopositioning receiver is disengaged, the accelerometer may be engaged to monitor whether the device is put back in motion.

Finally, several procedures have also been proposed for detecting when a mobile is travelling in association with a vehicle, as described in US20130245986. These procedures are usually based on the combination of sensor data (accelerometers, gyroscopes, magnetometers, etc.) together with GPS data to identify different states and motion patterns corresponding to different user's activities, such as walking, stepping out the car, sitting, etc.

Disadvantages of prior existing proposals are the following:

- Existing procedures for the automatic activation of geopositioning receivers (i.e. GPS) depending on whether a mobile device is in motion or at rest, as the one presented in US20130085861 and in the aforementioned approach described by Mikkel Baun Kjaergaardet al., only consider general movement patterns for the device.

- Without considering specific movement patterns associated to a moving vehicle, prior art (US20130085861 and Mikkel Baun Kjaergaardet al.) does not allow the use of existing energy-efficient activation of geopositioning receivers for a wide range of LBS applications in vehicles.
- Prior art also provides procedures for detecting when a mobile is travelling in association with a vehicle, as US20130245986. However these procedures do not include strategies for energy-efficient activation of geopositioning receivers.

Therefore, it is highly desirable to develop low-energy procedures for the automatic activation of geopositioning devices only in specific contexts.

**Summary of the invention**

The present invention solves the aforementioned problems and overcomes previously explained state-of-art work limitations by providing an energy-efficient method for the automatic activation and deactivation of the geopositioning receivers in a mobile user's terminal (e.g., a smartphone, tablet, etc.) depending on whether its user is moving in a vehicle or not. The invention also considers the case in that the user of the mobile terminal/device is the driver of the vehicle.

In the context of the invention, the following concepts are used:

Geopositioning device: a device, such as GPS (Global Positioning System) device, providing geographical information related to the current position of the user.
Location-based services (LBSs): applications that require and exploit knowledge about where the device is located.
Short-time probes: sequential tests scheduled at a given rate to collect a small amount (short-time) of low-energy sensor data to detect possible patterns of a moving vehicle.
Long-time probes: tests over larger sequences of sensor data (e.g. collected over one minute) data to confirm patterns of a moving vehicle.
Un-calibrated sensor data: biased measurements from sensors due to inaccuracies in the sensor devices.
Uncompensated global energy: energy measurement of sensor data without compensating possible bias effects in un-calibrated sensor data.
Compensated global energy: energy measurement of sensor data after compensating bias effects in un-calibrated sensors.

The present invention provides a configurable strategy for automatic activation of geopositioning devices, following a sequence of short-time and long-time probes for vehicle movement detection, which allows a customizable trade-off between precision and energy consumption. Short-time probes are defined to provide a first quick test to identify or discard possible moving of the vehicle in which the smartphone with geopositioning devices is located, while long-time probes are used to confirm that there is a situation, in accordance with a pattern, where the vehicle is certainly moving.

In particular, the invention provides an activation strategy which is implemented following a sequence of tests, referred to as probes, in order to detect sensor (probe) patterns that could correspond to a moving vehicle. More specifically, the geopositioning receiver activation uses short-time probes to provide a first quick identification or discard of possible moving vehicle patterns, followed by long-time probes to confirm moving vehicle situations (patterns). Furthermore, once the geopositioning receiver has been activated, the geopositioning receiver deactivation combines both positioning data (for example, speed data from GPS) and low-energy sensor data to cope with situations where, once in motion, the smartphone loses positioning information (and so GPS information is not available).

The present invention uses low-energy procedures for the automatic activation/deactivation of geopositioning devices and location-based services of users in vehicles, when the user uses these devices and services through a smartphone which is moving in a vehicle. More specifically, the low-energy procedure for detecting that the smartphone is inside a moving vehicle is based exclusively on data from embedded low-energy consumption sensors (not GPS) provided by the smartphone: accelerometers, gyroscopes, magnetometers, etc. The algorithm for the detection of moving vehicles is implemented, with low-power consumption, in the smartphone.

A first aspect of the present invention refers to a method for activating and deactivating geopositioning devices of mobile user terminals which can be in moving vehicles (and, in a possible scenario, the user of the mobile terminal maybe drive the vehicle), which comprises the following steps:

i) A detection step of detecting whether, at least one, geopositioning device of the mobile user terminal is located in a moving vehicle. The detection is based only on data from low-energy consumption sensors provided by the mobile user terminal.
ii) If the previous step detects that the user terminal is located in the moving vehicle, a step of identifying at least one probe pattern related to a situation of the moving vehicle is performed (by the user terminal in the moving vehicle);

iii) Based on the data from the low-energy consumption sensors of the user terminal and at least one identified probe pattern, in order to confirm that the user terminal is riding in the moving vehicle, a step of verifying moving vehicle situations identified before is performed. The situation is verified to correspond either to the user terminal riding in the moving vehicle either to the user terminal being stopped in the moving vehicle.

iv) After verifying if the situation corresponds to the mobile user terminal riding in the moving vehicle, the geopositioning device is activated. Then, the steps i)-iii) of detection, identification and verification of the user terminal in moving vehicle situations are repeated, in order to detect a change in the situation.

In a second aspect of the present invention, a mobile user terminal or device for activating and deactivating geopositioning devices in moving vehicles is disclosed. The mobile user terminal with al least one geopositioning device and a plurality of low-energy consumption sensors, comprises means for implementing the method described before, which are:

- At least a location detector, which is a module for detecting, based on data from the low-energy consumption sensors, whether a geopositioning device is located in a moving vehicle and, if so, identifying at least one probe pattern related to a situation of the moving vehicle.
- Processing means for verifying, based on the identified probe pattern(s) and the data from low-energy consumption sensors, whether the situation corresponds to the mobile user terminal riding in the moving vehicle or to the mobile user terminal being stopped in the moving vehicle. Depending on the result from the verification, the processing means deliver triggers an actuator (activator/deactivator) module on the geopositioning device.

In a last aspect of the present invention, a computer program is disclosed, comprising computer program code means adapted to perform the steps of the described method, when said program is run on proccesing means of a user terminal (e.g., smartphone or tablet).

The method and user terminal in accordance with the above described aspects of the invention has a number of advantages with respect to prior art, which can be summarized as follows:

- Compared to prior art approaches, the present invention allows the automatic activation as well as the deactivation of the geopositioning receivers in a smartphone based on detecting whether the user is moving in a vehicle or not. Furthermore, the invention considers application scenarios where the smartphone belongs to the driver of the vehicle.
- A flexible configuration of short-time and long-time probes both in terms of activation times and detection parameters provides a customizable trade-off between precision and energy consumption. It is through the combination of two features, the use of simple patterns based on data from low-energy consumption sensors (i.e. accelerometers, gyroscopes, etc) and a configurable detection strategy based on short-time and long-time probes, thanks to which the present invention represents a powerful solution for energy-efficient automatic activation of geopositioning receivers suitable for a wide range of LBSs and applications in vehicles.
- The present invention is energy-efficient since the activation/deactivation of the geopositioning device in the smartphone is based on data from embedded low-energy consumption sensors provided by the smartphone itself: accelerometers, gyroscopes, magnetometers, etc.
- The method does not require any restriction on the actual position of the smartphone inside the vehicle (i.e. it does not require the smartphone to be mounted or located on any particular place or device inside the vehicle). An important feature in this invention is that, as activation and deactivation procedures are based on global energies of three-axis sensors (accelerometers, gyroscopes,...) and not on specific energies acting on specific axis, the present invention does not impose any restriction on the actual position of the smartphone. Therefore, the smartphone may be situated and be moved from different positions inside the vehicle.
- Once a smartphone in a moving vehicle is detected, the deactivation algorithm is robust against smartphone in-vehicle movements and uncontrolled changes of position.
- The deactivation strategy is also robust to situations where the smartphone may lose its positioning information, as it always considers both positioning data and sensor data.

These and other advantages will be apparent in the light of the detailed description of the invention.

## Description of the drawings

For the purpose of aiding the understanding of the characteristics of the invention, according to a preferred practical embodiment thereof and in order to complement this description, the following Figures are attached as an integral part thereof, having an illustrative and non-limiting character:

Figure 1 shows a block diagram of a method for activating and deactivating geopositioning devices in a smartphone, according to a preferred embodiment of the invention.

Figure 2 shows short-time and long-time probes used for activating geopositioning devices in a smartphone riding in a moving vehicle, according to a possible embodiment of the invention.

Figure 3 shows long-time probes used for deactivating geopositioning devices in a smartphone riding in a moving vehicle, according to a possible embodiment of the invention.

Figure 4 shows a block diagram of a method for activating geopositioning devices in a smartphone when detected as riding in a moving vehicle, according to a possible embodiment of the invention.

Figure 5 shows a block diagram of a proccess for detecting a smartphone probably riding in a moving vehicle during a short-time probe, according to a possible embodiment of the invention.

Figure 6 shows a block diagram of a proccess for collecting and compensating or calibrating data from low-energy consumption sensors of a smartphone, according to a possible embodiment of the invention.

Figure 7 shows a block diagram of the use of collected data for detection proccess of a smartphone riding in a moving vehicle during a long-time probe, according to a possible embodiment of the invention.

Figure 8 shows a block diagram of the use of collected data for detection proccess of a smartphone not riding in a moving vehicle through a long-time probe, according to a possible embodiment of the invention.

**Preferred embodiment of the invention**

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

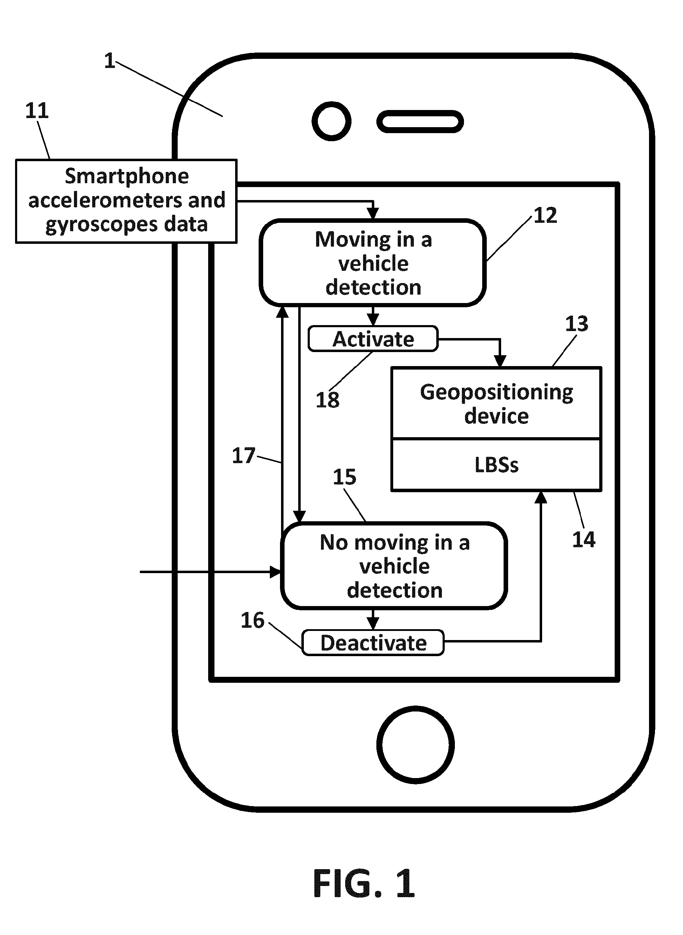

Figure 1 presents a block diagram of the method for activating and deactivating geopositioning devices (13) of a mobile user terminal (1) which can be in moving vehicles. Furthermore, in a possible scenario, the user of the mobile terminal (1) may be driving the vehicle. The method is running in the mobile user terminal (1), e.g., a smartphone, performing the following steps:

- data from low-energy consumption sensors (11), such as accelerometers and gyroscopes, of the mobile user terminal (1) are used to automatically detect whether the mobile user terminal (1) is riding in a vehicle (12);
- once the mobile user terminal (1) is detected moving in a vehicle, its geopositioning devices (13), e.g., a GPS receiver, are engaged or activated (18); additionally, one or more location-based services (14) may be also activated (18);
- a deactivation process is started to detect when the mobile user terminal (1) stops riding in the vehicle (15);
- once the mobile user terminal (1) is detected to be stopped or not to be in the vehicle (15), all the previously activated geopositioning devices (13) are disengaged or deactivated (16) and location-based services (14) informed;
- the automatic detection for the mobile user terminal (1) in a moving vehicle is then re-started (17).

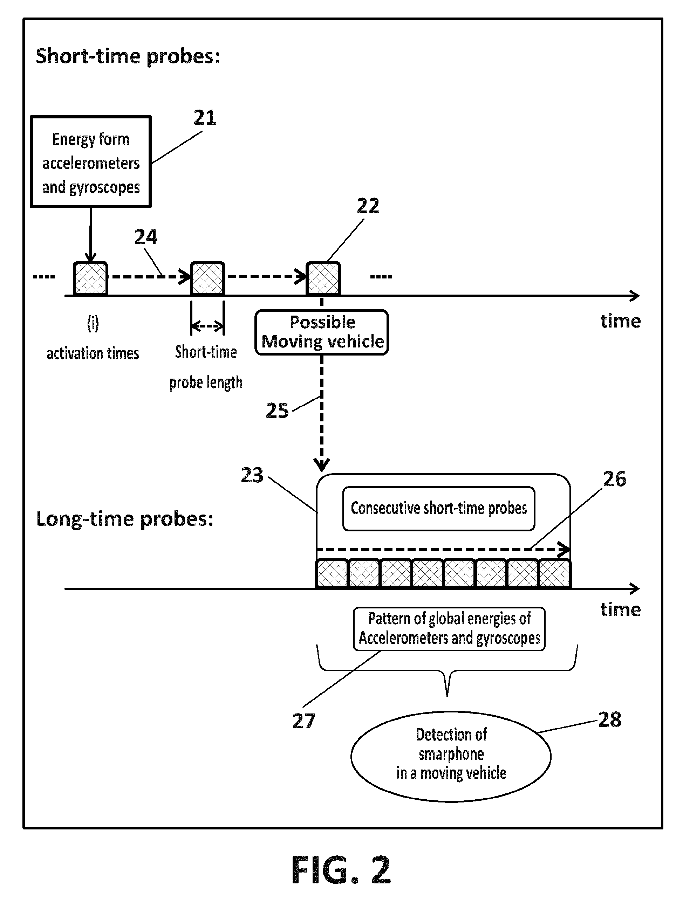

Figure 2 shows in more detail the activation strategy, which is based on two key aspects:

1) The use of simple patterns derived from global energies (21) of the low-energy consumption sensors (11), e.g., accelerometers and gyroscopes, to detect a moving vehicle. Moving vehicles are usually subjected to slowly changing acceleration and turning forces that present a characteristic behavior different from other user activities such as walking, standing, watching a video, etc.

2) The use of a sequence of short-time and long-time tests or probes for vehicle movement detection. Short-time probes (22) analyze global energies from low-energy consumption sensors (11) over a relatively short period of time, while long-time probes (23) combine global energies (21) from both short and long periods of time.

2.1) A sequence of consecutive short-time probes (22), triggered at configurable time intervals (24), allows to implement an energy-efficient quick discard strategy for situations clearly not related to moving vehicles, such as walking, running, motionless, etc.

2.2) Long-time probes (23) are activated only after a short-time probe detects a possible pattern (25) of a moving vehicle following an efficient energy consumption strategy. Long-time probes (23) confirm (28) that the smartphone is in a moving vehicle based on both, the combination of the detection results from a consecutive sequence of short-time probes (26) and a pattern (27) of global energies (21) of low-energy consumption sensors (11) for a longer time segment represented by the long-time probe.

The strategy for automatic activation of the geopositioning receiver in the mobile user terminal (1) shown in Figure 2 can be configured to work with different trade-offs between precision and energy consumption. More specifically, through the definition of different values for:

- lengths for short-time and long-time probes;
- time interval to trigger consecutive short-time probes;
- number of consecutive short-time probes inside a long-time probe.

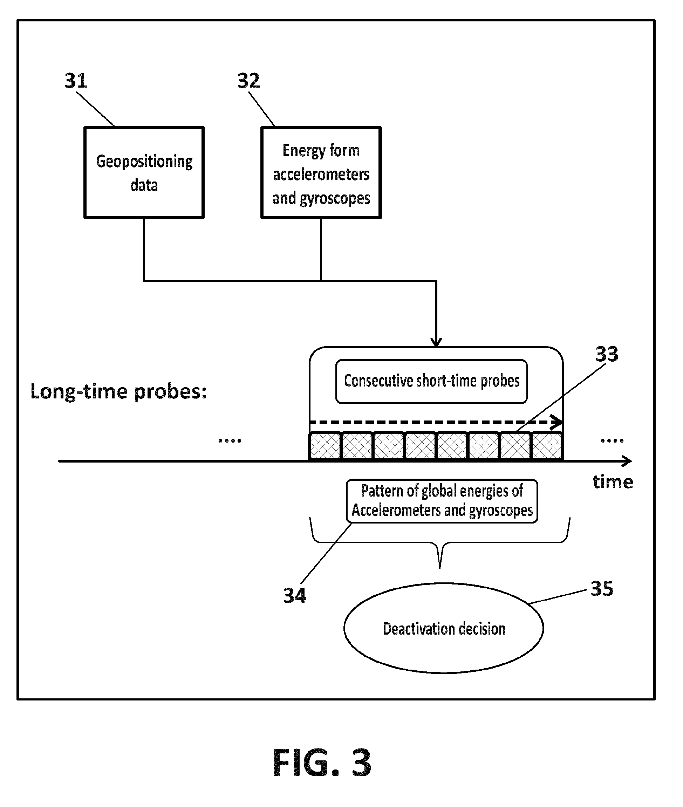

The strategy for the deactivation of the geopositioning receiver, shown in Figure 3, presents the following features:

- Although after detecting the smartphone is in a moving vehicle the geopositioning receiver is activated, it is considered that there may be situations where the receiver may lose its positioning information. Consequently the deactivation strategy always considers not only geopositioning data (31), if available, but also sensor data (32), i.e., from accelerometers, gyroscopes, etc.

- To detect that the smartphone is no longer moving in a vehicle, the deactivation strategy may only consider long-probes that are continuously tested once the smartphone has been detected to be in a moving vehicle.

- The deactivation decision (35) is based on: available geopositioning data, such as the estimated speed from GPS, and detection results from a consecutive sequence of short-time probes (33) together with patterns of global energies of accelerometers and gyroscopes for the whole time segment represented by the long-time probe (34).

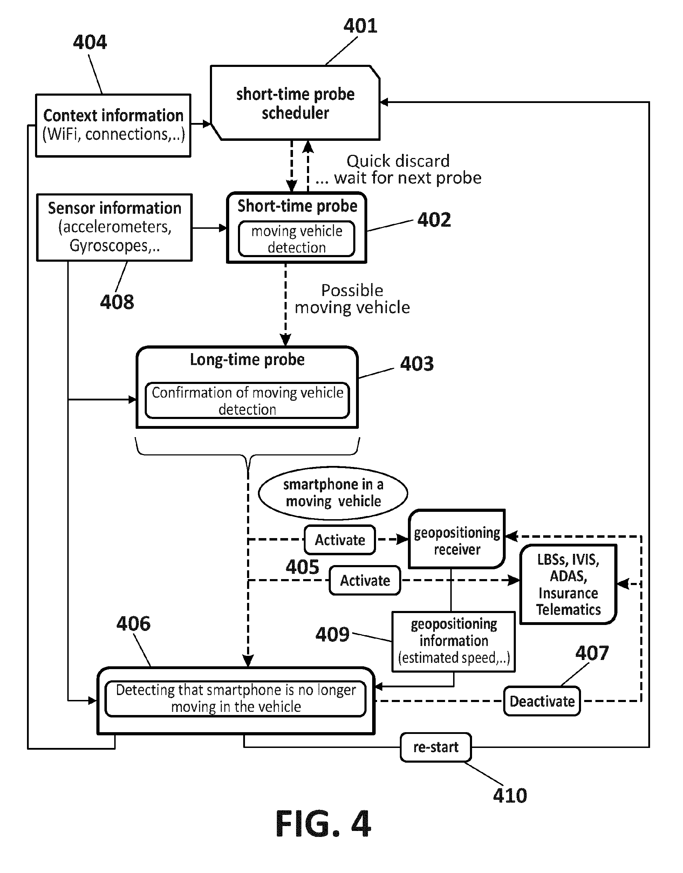

Figure 4 illustrates a broad implementation of the strategy to activate a geopositioning device in a smartphone when it is moving in a vehicle. Short-time probes are triggered at configurable time intervals (401). Short-time probes implement a fast and energy efficient algorithm to detect when it is probable that the smartphone is riding in a vehicle (402). Also as shown in the figure, following positive short-time detection a long-time probe is initiated to provide a more reliable detection test (403). The detection algorithm in long-time proves is based on the analysis of data from a longer period of time.

Different implementations of this invention can use different ways to activate short-time and long-time probes. For example, even in situations where no short-time positive detections are present, long-time probes can be randomly activated after a variable number of short-time probes. This will provide more precise detection results at expenses of higher battery consumptions. In another implementation, context information available in the smartphone, such as Wi-Fi connection, can be used to define different short-time or long-time activation schedules (404). Also other sources of information as the time of the day or particular user profiles, if available, could be used to implement different ad-hoc activation strategies.

After detecting the smartphone riding into a moving vehicle, the geopositioning receiver is activated (405). This allows the subsequent activation of a variety of in-vehicle location-based services (LBSs) as insurance telematics, in-vehicle information systems (IVIS), advanced driving assistant systems (ADAS), etc. At this point the embodiment of this invention will provide a strategy to detect that the smartphone is no longer moving in the vehicle (406), making this information available to the active LBSs, disengaging the geopositioning receiver (407) and restarting the short-time probe scheduler (410). Again any other sources of contextual information can be used to implement the deactivation algorithm, for example the detection of Wi-Fi connections, or the activation of some particular smartphone applications or activities defined in specific user profiles.

Detecting moving vehicle patterns in both short-time and long-time probes can be implemented using different data from low-power sensors available in the smartphone (408), such as accelerometers, gyroscopes, magnetometers, etc. In a preferred implementation, data from three-axis accelerometers and gyroscopes can be combined.

Once the geopositioning receiver is activated, detecting that smartphone is no longer in a moving vehicle can use estimated speed information provided by the geopositioning device (409). However there may be situations where the geopositioning receiver may lose accuracy and information (for example entering into a tunnel, an area with high buildings, etc.), thus similarly as in the activation algorithm other available data (408) from sensors, accelerometers, gyroscopes, magnetometers,.., may be used.

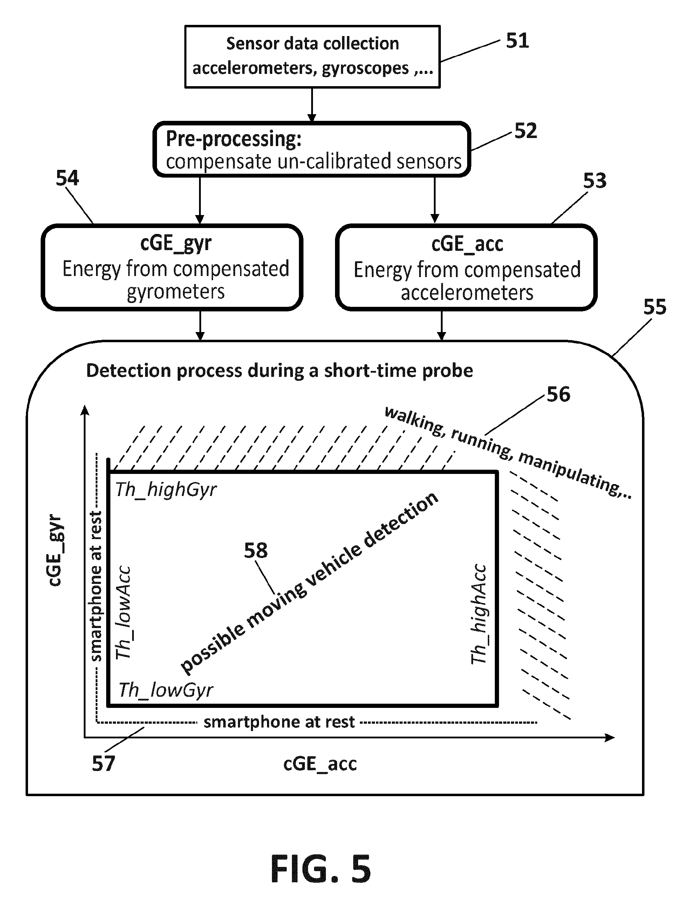

In a possible embodiment, the algorithm for detecting a smartphone in a moving vehicle may be based on measurements of global energies from three-axis acceleration and gyroscope sensors, as shown in Figure 5. A data collection component (51) receives three axis accelerations (ax, ay, az) and three gyro angular velocities (vx, vy, vz) from the smartphone and implements resampling and interpolation algorithms to have a stable and consistent sampling frequency for all data. Before using these sampled and interpolated data to obtain global acceleration and gyroscopes energies (53, 54), a pre-processing component (52) may be applied to compensate possible un-calibrated sensor behavior, usually present in smartphone sensors - accelerometers, gyroscopes, magnetometers, etc.-. In some cases, this compensation may be applied on each of the accelerometer signals (53) and gyroscope signals (54) corresponding to each one of the smartphone orientation axis (x,y,z); in other embodiment, it can be applied on the un-calibrated global energy.

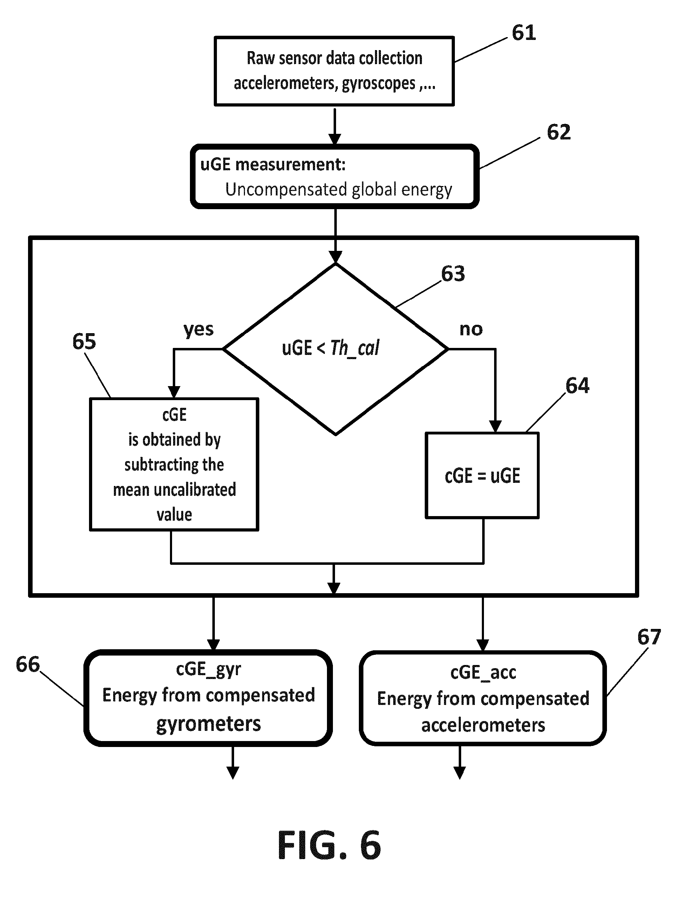

In this latter case, using un-calibrated global energy, a compensation process suitable for both accelerometer and gyroscope data may be implemented following a procedure illustrated in Figure 6, comprising the following steps:

1) All the sampled data (61) from accelerometer and gyroscope sensors corresponding to a given segment of time, generally the short-time probe length, is used to measure (62) the uncompensated global energy (uGE):

$$uGE = \frac{1}{N\_STP} \sum_{i=1}^{N\_STP} E_i$$

where N_STP is the number of sensor samples corresponding to a short-time probe, and $E_i$ is the energy of each sensor sample i, which is vector of coordenates ($s_x(i)$, $s_y(i)$, $s_z(i)$) measured as the module of the three-axis sensor vector:

$$E_i = \sqrt{s_x(i)^2 + s_y(i)^2 + s_z(i)^2}$$

As pointed out before, in the previous expression, the module of the three-axis sensor vector is used as an Energy-related measure. Other embodiments can use different energy measurements, for example using the sum of the squared values, log-energies, etc. Also energies from different frequency bands obtained through filtering or using Fourier Transforms may be used.

A threshold (Th_cal) is used (63) on the uncompensated global energy (uGE) to check whether this global energy corresponds, with a high probability, to a situation where the smartphone is not moving. In those cases, un-calibrated sensor data can lead to unrealistic global energy values. Consequently a compensated global energy is obtained by subtracting the mean un-calibrated value (uGE) to each sample before the global energy calculation (65).

$$cGE = \begin{cases} \dfrac{1}{N_{STP}} \sum_{i=1}^{N_{STP}} (E_i - uGE) & if\ uGE < Th\_cal \\[2em] uGE & other\ wise \end{cases}$$

It is through this process that compensated energy measurements can be obtained for different sensor data (66, 67) such as three-axis gyroscopes (cGE_gyr) and three-axis accelerometers (cGE_acc). In other embodiments, the compensation process can use information from the sequence of short-time or long-time probes. For example, the accumulated average of energies obtained from data over several past short-time probes may be stored and used to compensate future energy measurements.

Going back to the detection process in Figure 5, compensated energy (53, 54) measurements for three-axis accelerometers (cGE_acc) and three-axis gyroscopes (cGE_gyr) respectively are used to detect whether or not the smartphone is in a moving vehicle in both short-time and long-time probes. Different classification techniques can be used: as Linear Discriminant Analysis, Bayesian Classification, Classification and Regression Tree (CART) etc. In other embodiments instead of implementing a detection algorithm based on global energy measurements, a variety pattern matching algorithms, as, for example, Dynamic Time Warping (DTW), may be applied on trajectories described by the time sequence of energy values Ei measured over several sensor data.

In some embodiments, the detection algorithm during short-time probes may be based on the application of simple thresholds on compensated energies (53, 54) from accelerometers (cGE_acc) and gyroscopes (cGE_gyr). For example, in the detection process illustrated in Figure 5, during the short-time probe (55) two high thresholds (Th_highAcc, Th_highGyr) for cGE_acc and cGE_gyr, respectively, are used to discard a moving vehicle detection when high acceleration and gyroscopes energies are measured; as this situation is generally found when the user is walking, running, or simple manipulating the smartphone. On a complementary way, in the short-time probe (55) two low energy thresholds (Th_lowAcc, Th_lowGyr) are used to detect situations where low acceleration and gyro energies may correspond to situations where the smartphone is at rest. Consequently, when a short-time probe does not detect a possible high energy (56) or motion-less situation (57), a possible situation of moving vehicle is detected (58).

In several implementations of the invention -after detecting a possible moving vehicle situation in a short-time probe- the processing of a long-time probe starts, as shown in Figure 4. Long-time probes (403) use sensor data corresponding to a longer period of time, thus providing a more reliable detection result. In various embodiments different ways of processing available sensor data can be implemented.

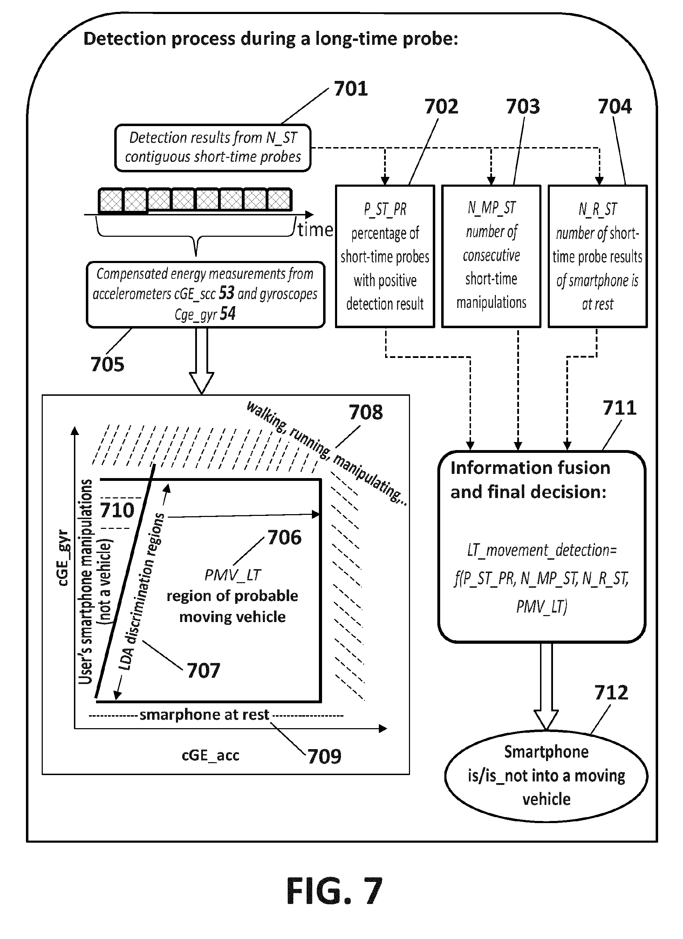

For example, one implementation, illustrated in Figure 7 may consider the combination of four types of information:

a) Processing a long-time probe as a sequence of $N\_ST$ contiguous short-time probes (701) may provide a metric for moving vehicle detection as the percentage (702) of short-time probes with positive detection result, $P\_ST\_PR$:

$$P\_ST\_PR = \frac{1}{N\_ST} \sum_{i=1}^{N\_ST} PR_i$$

where:

$$PR_i = \begin{cases} 1 & \text{if positive detection result} \\ & \text{in short} - \text{time probe i} \\ 0 & \text{if negative detection result} \\ & \text{in short} - \text{time probe i} \end{cases}$$

b) Also considering the long-time probe as a sequence of $N\_ST$ short-time probes, a metric for moving vehicle detection may be the number of consecutive short-time probes results (703) detecting high energy situations $N\_MP\_ST$. A high value for $N\_MP\_ST$ may indicate that the user is walking or manipulating the smartphone so she is not probably driving a vehicle. Consequently this metric can be also suitable to detect that the smartphone user is not the driver of a vehicle.

c) Similarly to b) another measure to detect that the smartphone is not in a moving vehicle may be the number of short-time probe results (704) indicating that the smartphone is at rest, $N\_R\_ST$. Even though some short-time probes can detect that the smartphone is at rest when the vehicle is stopped, the period of time evaluated by the long-term probe should be longer than frequent short vehicle stops, for example when it is waiting under a red traffic light. It is also important to note that, as described before, a short-time probe detects that the smartphone is at rest using both accelerometer and gyroscope sensors, this will prevent failures to detect a peaceful moving vehicle that will barely generate acceleration measurements but can drive gyroscope signals due to frequent turns in roads.

d) Besides previous metrics provided as outcomes of successive short-time probes inside a long-time probe, all the sampled data from sensors, i.e. accelerometers, gyroscopes,..., gathered during the whole long-time probe duration (705) can be used to detect a pattern $PMV\_LT$ of a vehicle in motion (706). As in the case of short-time probes, various embodiments may use different pattern matching algorithms to detect a moving vehicle using sensor data. For example, a detection process may use Linear Discrimination Analysis (LDA) on a 2D vector (707) composed by compensated energy measurements (53, 54) from accelerometers cGE_acc and gyroscopes cGE_gyr, now obtained during the whole duration of a long-time probe. As illustrated in Figure 7, through Linear Discriminant Analysis techniques (LDA) different regions excluding a moving vehicle situation may be detected, for example:

d.1 A region with low acceleration energy, cGE_acc, but higher gyroscope energy, cGE_gyr, may represent different situations (710) not compatible with a smartphone use by a vehicle driver, for example: standing, rising to standing from sitting, watching a video, etc.

d.2 A region with both low cGE_acc and cGE_gyrmay correspond to situations (709) where the smartphone is at rest.

d.3 A region with both high cGE_acc and cGE_gyr values generally corresponds to other situations (708) not compatible vehicle movements as when the user is walking, running, or simple manipulating the smartphone. In other embodiments, different classification techniques as Classification and Regression Tree (CART) can be used and they can also have as input sensor energies obtained in a variety of ways (log energies, frequency-band energies, etc.) and from different sensors. Also a variety of pattern matching algorithms, as Dynamic Time Warping (DTW) or Hidden Markov Models (HMM) may be applied on trajectories described by the time sequence of sensor energy values obtained through the whole duration of the long-time probe.

Once several metrics have been obtained, a fusion algorithm (711) combines them to provide a final decision (712) on whether the smartphone is into a moving vehicle or not:

$$LT\_movement\_detection = f(P\_ST\_PR, N\_MP\_ST, N\_R\_ST, PMV\_LT)$$

In some embodiments, decision rules may be used by applying different thresholds on *P_ST_PR, N_MP_ST, N_R_ST* and then combining these partial results with *PMV_LT* to take the final decision. In some other embodiments different fusion algorithms as Bayesian Networks (BN) or Logistic Regression (LR) may be use to fuse all the available information.

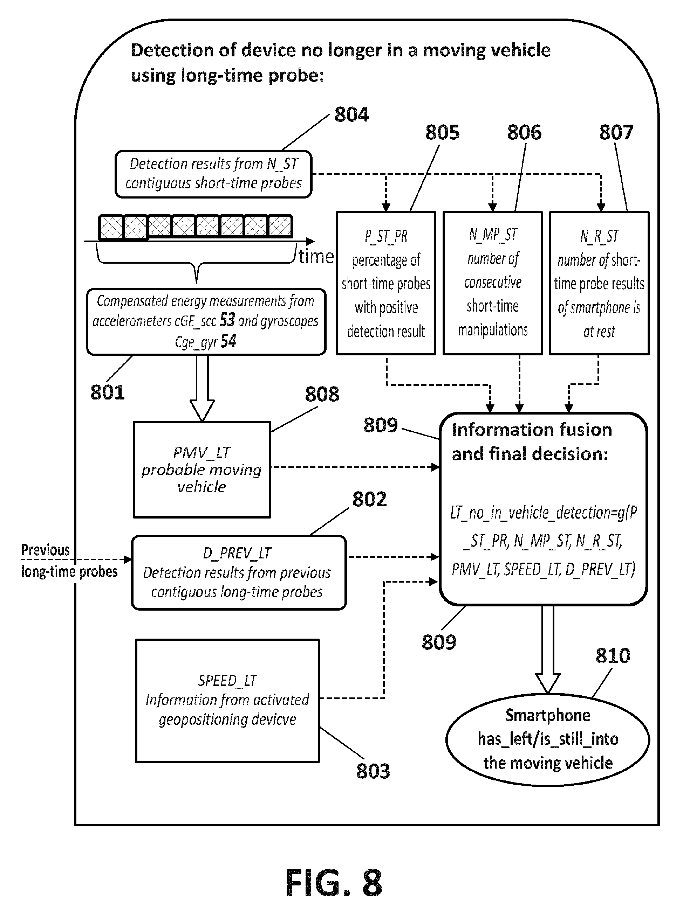

The block diagram in Figure 8 describes an implementation of the algorithm for detecting that the smartphone is no longer in a moving vehicle. In various embodiments, similarly to the activation algorithm, the deactivation algorithm may be implemented using measurements of compensated global energies (801) from three-axis acceleration and gyroscope sensors (cGE_acc, cGE_gyr). Differently to activation, contiguous long-time probes may be processed 802 to obtain a more reliable metric *D_PREV_LT* based on decisions taken over longer periods of time. For example, in an implementation may be *D_PREV_LT* the number of previous long-term probes (802) detecting that the smartphone has left the moving vehicle. Also differently from the activation algorithm, there is the possibility of using information provided by the activated geopositioning device, for example, the estimated speed information (803).

Therefore, in various embodiments, the estimated speed information (803), *SPEED_LT,* from the geopositioning device may be combined with the same four metrics used by the activation algorithm based on the results (804) from *N_ST* contiguous short-time probes: a) *P_ST_PR,* percentage of short-time probes with positive detection result (805); b) *N_MP_ST,* number of consecutive short-time high energy situations (806); c) *N_R_ST,* the number of short-time probe results indicating that the smartphone is at rest (807):, and d) *PMV_LT,* detecting a pattern of a vehicle in motion using all data in the long-time probe (808). A fusion algorithm (809) combines all the available information to detect when the smartphone is no more into a moving vehicle (810):

$$LT\_no\_in\_vehicle\_detection =$$
$$g(P\_ST\_PR, N\_MP\_ST, N\_R\_ST, PMV\_LT, SPEED\_LT, D\_PREV\_LT)$$

In some embodiments, decision rules may be used. For example, the estimated speed information *SPEED_LT* may be enough to decide that the smartphone is still into a moving vehicle, but there may be situations where the geopositioning receiver may lose information (for example when entering into a tunnel, or an area with high buildings, etc.) making *SPEED_LT* not reliable or unavailable. In those situations different thresholds may be applied on *P_ST_PR, N_MP_ST, N_R_ST,* so that these partial results can be combined with *PMV_LT* to take the final decision. In some other embodiments different fusion algorithms as Bayesian Networks (BN) or Logistic Regression (LR) may be use to fuse all the available information. Other implementations may also wait for several positive decisions (i.e. smartphone is not in a moving vehicle) from consecutive long-time proves *D_PREV_LT* before deciding the disengagement of the geopositioning receiver.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. A method for activating and deactivating geopositioning devices in moving vehicles, the method being **characterized**

**by** comprising:

i) detecting whether a geopositioning device (13) of a mobile user terminal (1) is located in a moving vehicle, based on data from low-energy consumption sensors (11) provided by the mobile user terminal (1);

ii) if the mobile user terminal (1) is located in the moving vehicle, identifying at least one probe pattern related to a situation of the moving vehicle;

iii) based on the data from low-energy consumption sensors (11) provided by the mobile user terminal and the, at least one, identified probe pattern, verifying whether the situation corresponds to the mobile user terminal (1) riding in the moving vehicle (12) or to the mobile user terminal (1) being stopped in the moving vehicle (15);

iv) if the situation corresponding to the mobile user terminal (1) riding in the moving vehicle is verified, activating (18) the geopositioning device (13) and repeating steps i)-iii).

2. The method according to claim 1, further comprising:

v) if the geopositioning device (13) is activated and the situation corresponding to the mobile user terminal (1) being stopped in the moving vehicle is verified, deactivating (16) the geopositioning device (13) and repeating steps i)-iii).

3. The method according to claim 1, further comprising, if the geopositioning device (13) is activated and the situation corresponding to the mobile user terminal (1) riding in the moving vehicle is verified, activating (18) at least one location-based service (14) which uses the geopositioning device (13).

4. The method according to claim 3, further comprising informing the, at least one, activated location-based service (14) when the geopositioning device (13) is deactivated.

5. The method according to any preceding claim, wherein the at least one probe pattern is defined from global energies (21) of the low-energy consumption sensors (11) and step ii) uses:

- a sequence of short-time probes (22) for analyzing global energies (21) from low-energy consumption sensors (11) over a first time interval (24), and

- a sequence of long-time probes (23) for combining global energies (21) from low-energy consumption sensors (11) both over the first time interval (24) and over a second time interval which is longer than the first time interval (24).

6. The method according to claim 5, wherein long-time probes (23) are activated only after a short-time probe identifies at least one probe pattern related to a situation of the moving vehicle and long-time probes (23) confirms (28) that the mobile user terminal (1) is in a moving vehicle based on both, the analisys performed by the sequence of short-time probes (26) and a pattern (27) of global energies (21) of low-energy consumption sensors (11) over the second time interval.

7. The method according to any of claims 5-6, wherein the global energies (21) are global acceleration and gyroscopes energies (53, 54) obtained respectively from three-axis acceleration and gyroscope sensors of the mobile user terminal (1).

8. A mobile user terminal (1) for activating geopositioning devices in moving vehicles, the mobile user terminal (1) comprising:

- at least one geopositioning device (13) and a plurality of low-energy consumption sensors (11), and the mobile user terminal (1) being **characterized by** further comprising:

- a location detector for detecting, based on data from the low-energy consumption sensors (11), whether the, at least one geopositioning device (13) is located in a moving vehicle and, if the mobile user terminal (1) is located in the moving vehicle, identifying at least one probe pattern related to a situation of the moving vehicle;

- processing means for verifying, based on the, at least one, identified probe pattern and the data from low-energy consumption sensors (11), whether the situation corresponds to the mobile user terminal (1) riding in the moving vehicle (12) or to the mobile user terminal (1) being stopped in the moving vehicle (15) and, if the situation corresponds to the mobile user terminal (1) riding in the moving vehicle is verified, activating (18) the geopositioning device (13).

9. The mobile user terminal (1) according to claim 8, wherein the processing means are configured for deactivating (16) the geopositioning device (13) if the geopositioning device (13) is previously activated and the situation corresponding to the mobile user terminal (1) being stopped in the moving vehicle is verified.

10. The mobile user terminal (1) according to any of claims 8-9, wherein the location detector and the processing means are configured for repeating steps i) and ii)-iii) respectively of the method defined according to claims 1-7.

11. The mobile user terminal (1) according to any of claims 8-10, wherein the low-energy consumption sensors (11) are selected from gyroscopes, accelerometers and magnetometers.

12. The mobile user terminal (1) according to any of claims 8-11, wherein the geopositioning device (13) is a GPS receiver.

13. The mobile user terminal (1) according to any of claims 8-12, which is a smartphone.

14. The mobile user terminal (1) according to any of claims 8-12, which is a tablet.

15. A computer program product comprising program code means which, when loaded into processing means of a mobile user terminal (1), make said program code means execute the method according to any of claims 1-7.

**FIG. 1**

**Short-time probes:**

21

Energy form
accelerometers
and gyroscopes

22

24

(i)
activation times

Short-time
probe length

Possible
Moving vehicle

time

25

**Long-time probes:**

23

Consecutive short-time probes

26

time

Pattern of global energies of
Accelerometers and gyroscopes

27

28

Detection of
smarphone
in a moving vehicle

# FIG. 2

**31**

Geopositioning data

**32**

Energy form accelerometers and gyroscopes

Long-time probes:

Consecutive short-time probes

**33**

....

....

time

Pattern of global energies of Accelerometers and gyroscopes

**34**

**35**

Deactivation decision

# FIG. 3

EP 3 051 315 A1

**FIG. 4**

15

FIG. 5

Raw sensor data collection
accelerometers, gyroscopes ,... — 61

uGE measurement:
Uncompensated global energy — 62

63

uGE < *Th_cal*

yes — 65

no

cGE
is obtained by
subtracting the
mean uncalibrated
value

cGE = uGE — 64

cGE_gyr
Energy from compensated
**gyrometers** — 66

cGE_acc
Energy from compensated
accelerometers — 67

# FIG. 6

**Detection process during a long-time probe:**

**701**

*Detection results from N_ST contiguous short-time probes*

**702**     **703**     **704**

time

**705**

*Compensated energy measurements from accelerometers cGE_scc 53 and gyroscopes Cge_gyr 54*

| P_ST_PR percentage of short-time probes with positive detection result | N_MP_ST number of consecutive short-time manipulations | N_R_ST number of short-time probe results of smartphone is at rest |
|---|---|---|

**708**

walking, running, manipulating,..

cGE_gyr

User's smartphone manipulations (not a vehicle)

LDA discrimination regions

**710**

**706**

*PMV_LT*
**region of probable moving vehicle**

**707**

-------smarphone at rest---------------

cGE_acc

**709**

**711**

**Information fusion and final decision:**

*LT_movement_detection= f(P_ST_PR, N_MP_ST, N_R_ST, PMV_LT)*

**712**

Smartphone is/is_not into a moving vehicle

# FIG. 7

**Detection of device no longer in a moving vehicle using long-time probe:**

804

805  806  807

*Detection results from N_ST contiguous short-time probes*

| *P_ST_PR* percentage of short-time probes with positive detection result | *N_MP_ST* number of consecutive short-time manipulations | *N_R_ST* number of short-time probe results of smartphone is at rest |
|---|---|---|

*Compensated energy measurements from accelerometers cGE_scc **53** and gyroscopes Cge_gyr **54***

801

808

*PMV_LT probable moving vehicle*

809

**Information fusion and final decision:**

$LT\_no\_in\_vehicle\_detection = g(P\_ST\_PR, N\_MP\_ST, N\_R\_ST, PMV\_LT, SPEED\_LT, D\_PREV\_LT)$

802

Previous long-time probes

*D_PREV_LT Detection results from previous contiguous long-time probes*

809

810

*SPEED_LT Information from activated geopositioning devicve*

803

Smartphone has_left/is_still_into the moving vehicle

# FIG. 8

**EP 3 051 315 A1**

Europäisches Patentamt
European Patent Office
Office européen des brevets

# EUROPEAN SEARCH REPORT

Application Number

EP 15 38 2021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/129544 A1 (HODIS MORDECHAI [US] ET AL) 24 May 2012 (2012-05-24) * paragraphs [0006], [0008], [0009], [0027], [0090]; claim 1; figures 8,9 * | 1-5,7-15 | INV. G01S19/34 |
| X | US 2012/289244 A1 (GOYAL AMIT [US]) 15 November 2012 (2012-11-15) * paragraphs [0030] - [0031]; figure 3 * | 1,8,15 | |
| X,D | US 2013/245986 A1 (GROKOP LEONARD HENRY [US] ET AL) 19 September 2013 (2013-09-19) * paragraph [0061]; figures 1, 5 * | 1,8,15 | |
| A | US 2013/324196 A1 (WANG CHENYU [US] ET AL) 5 December 2013 (2013-12-05) * the whole document * | 1-15 | |
| A | US 2013/102323 A1 (CZOMPO JOSEPH [US]) 25 April 2013 (2013-04-25) * the whole document * | 1-15 | |
| A | US 2013/314278 A1 (LIM HYEBONG [KR] ET AL) 28 November 2013 (2013-11-28) * paragraph [0122]; figure 6 * | 1-15 | TECHNICAL FIELDS SEARCHED (IPC) G01S |

The present search report has been drawn up for all claims

| Place of search | Date of completion of the search | Examiner |
|---|---|---|
| Munich | 15 July 2015 | Kern, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 38 2021

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2015

| Patent document cited in search report | Publication date | Patent family member(s) | Publication date |
|---|---|---|---|
| US 2012129544 A1 | 24-05-2012 | NONE | |
| US 2012289244 A1 | 15-11-2012 | US 2012289244 A1<br>US 2015087264 A1<br>US 2015087327 A1 | 15-11-2012<br>26-03-2015<br>26-03-2015 |
| US 2013245986 A1 | 19-09-2013 | CN 103843314 A<br>JP 2014531816 A<br>KR 20140060369 A<br>US 2013245986 A1<br>WO 2013040493 A1 | 04-06-2014<br>27-11-2014<br>19-05-2014<br>19-09-2013<br>21-03-2013 |
| US 2013324196 A1 | 05-12-2013 | NONE | |
| US 2013102323 A1 | 25-04-2013 | US 2013102323 A1<br>WO 2013058936 A1 | 25-04-2013<br>25-04-2013 |
| US 2013314278 A1 | 28-11-2013 | CN 103424756 A<br>EP 2667221 A2<br>KR 20130131805 A<br>US 2013314278 A1 | 04-12-2013<br>27-11-2013<br>04-12-2013<br>28-11-2013 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130085861 A

- US 20130245986 A

**Non-patent literature cited in the description**

- Improving energy efficiency of location sensing on smartphones. **KYU-HAN KIM et al.** Proceedings of the 8th international conference on Mobile systems, applications and services. ACM, 2012
- Energy-efficient positioning for smartphones using cell-id sequence matching. **KYU-HAN KIM et al.** Proceedings of the 9th international conference on Mobile systems, applications and services. ACM, 2011
- **KYU-HAN KIM et al.** *Improving energy efficiency of location sensing on smartphones*

- Entracked: energy-efficient robust position tracking for mobile devices. **MIKKEL BAUN KJAERGAARD et al.** Proceedings of the 7th international conference on Mobile systems, applications and services. ACM, 2009
- **CHUANG-WEN YOU et al.** Impact of sensor-enhanced mobility prediction on the design of energy-efficient localization. *Ad Hoc Networks,* 2008, 1221-1237